# EUROPEAN PATENT APPLICATION

(11) **EP 3 352 058 A1**
(43) Date of publication of application: **25.07.2018**
(21) Application number: 16846287.7
(22) Date of filing: 02.09.2016
(51) Int. Cl.: G06F 3/041, G06F 3/044

(54) **OPERATION DETECTION DEVICE**

(30) Priority: 14.09.2015 JP 2015180398
(71) Applicant: Kabushiki Kaisha Tokai-Rika-Denki-Seisakusho, Niwa-gun, Aichi 480-0195 (JP)
(72) Inventor: NOGUCHI, Kunitoshi, Niwa-gun Aichi 480-0195 (JP)
(74) Representative: Gill, David Alan
(86) International application number: PCT/JP2016/075861
(87) International publication number: WO 2017/047416

(57) **Abstract**

An operation detection device in which a touch panel is provided with: a detection unit that detects an operation finger and outputs a detection value, said operation finger being a finger that approaches and comes into contact with an operation surface; and a control unit having an approach threshold value for detecting an operation finger that approaches the operation surface, said control unit serving as a determination unit that, when a plurality of detection values greater than or equal to the approach threshold value are present at positions separated from the operation surface as a result of the detection of non-detection targets differing from an operation finger, sets set ranges of the same predetermined size around the detection values greater than or equal to the threshold value and determines an operation on the premise that the detection value greater than or equal to the approach threshold value in the set range having the smallest value for a calculated value calculated from the detection values included in the set ranges is the detection value corresponding to the detection of an operation finger.

## Description

### Technical field

The present invention relates to an operation detection device.

### Background art

A touchpad input device has been known that includes a controller having a palm rejection function (for example, see Patent Literature 1). The palm rejection function determines whether a contact region of an object calculated based on a change in an electrical variable detected due to the object approaching an operation surface, is due to a fingertip or a palm.

The controller of this touchpad input device determines that the contact region is due to a palm when a difference in area is great between a first proximity region calculated at a first sensitivity and a second proximity region calculated at a second sensitivity higher than the first sensitivity. The controller then invalidates the operation. Thus, occurrences of false operation due to contact by a palm when operating a keyboard can be reduced.

### Citation list

### Patent literature

Patent Literature 1: JP 2015-141425 A

### Summary of the invention

### Technical problem

In recent years, a hover function has been known that detects not only a detection target contacting an operation surface but also a detection target approaching the operation surface. This hover function can detect a gesture or the like made in proximity to the operation surface. However, to detect the proximity state, a sensitivity is set to be higher than a sensitivity set in a case to detect contacts, thus, a non-detection target other than a detection target may be detected.

An object of the invention is to provide an operation detection device with which occurrences of false detection of a non-detection target can be reduced.

### Solution to problem

An operation detection apparatus according to one embodiment of the invention includes a detector and a determination unit. The detector is configured to detect a detection target that approaches and contacts an operation surface and output a detection value. The determination unit has a proximity threshold value for detecting the detection target that approaches the operation surface. The determination unit is configured to, in a case where a plurality of detection values of greater than or equal to the proximity threshold value are present distanced from each other on the operation surface due to detection of a non-detection target different from the detection target, set setting ranges having the same predetermined size, with the detection values of greater than or equal to the proximity threshold value as centers. The determination unit is configured to determine the detection value of greater than or equal to the proximity threshold value in the setting range having the smallest calculation value calculated from the detection values included in the setting ranges as a detection value at which the detection target is detected, and determine an operation.

### Advantageous effects of the invention

One embodiment of the invention can provide an operation detection device with which occurrences of false detection of a non-detection target can be reduced.

### Brief description of the drawings

FIG. 1A is a schematic diagram illustrating an example of an interior of a vehicle in which a touch panel according to a first embodiment is installed.
FIG. 1B is a block diagram illustrating a configuration of the touch panel.
FIG. 2A is a perspective view illustrating an example of a relationship between a distribution of detection values of the touch panel of the first embodiment and a hand of an operator.
FIG. 2B is a schematic diagram illustrating an example of a setting range.
FIG. 2C is a schematic diagram illustrating an example of the distribution of the detection values and the setting range.
FIG. 3 is a flowchart illustrating an example of operations of the touch panel according to the first embodiment.
FIG. 4 is a schematic diagram illustrating an example of a distribution of detection values detected by a touch panel and a setting range according to a second embodiment.
FIG. 5 is a flowchart illustrating an example of operations of the touch panel according to the second embodiment.

### Description of embodiment

### Overview of Embodiment

An operation detection device according to an embodiment includes a detector and a determination unit. The detector is configured to detect a detection target that approaches and contacts an operation surface and output a detection value. The determination unit has a proximity threshold value for detecting the detection target that approaches the operation surface. The determination unit is configured to, in a case where a plurality of detection values of greater than or equal to the proximity threshold value are present distanced from each other on the operation surface due to detection of a non-detection target different from the detection target, set setting ranges having the same predetermined size, with the detection values of greater than or equal to the proximity threshold value as centers. The determination unit is configured to determine the detection value of greater than or equal to the proximity threshold value in the setting range having the smallest calculation value calculated from the detection values included in the setting ranges as a detection value at which the detection target is detected, and determine an operation.

The operation detection apparatus determines that the detection value of greater than or equal to the proximity threshold value in the setting region having the smallest calculation value is a detection value at which the detection target is detected. Thus, even in the case where the plurality of detection values of greater than or equal to the proximity threshold value are present due to detection of the non-detection target, the detection target and the non-detection target can be appropriately separated. The operation detection device can reduce occurrences of false detection of the non-detection target.

### First Embodiment

### General Description of Touch Panel 1

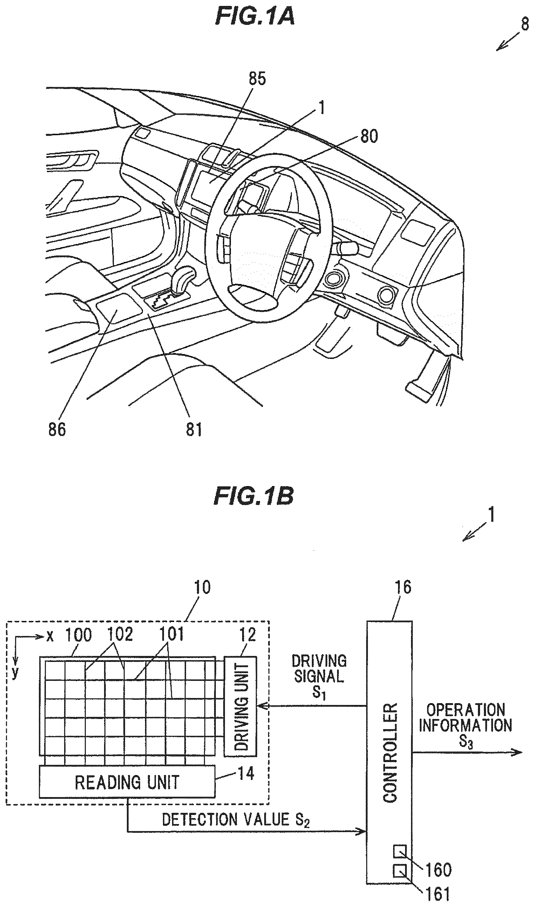

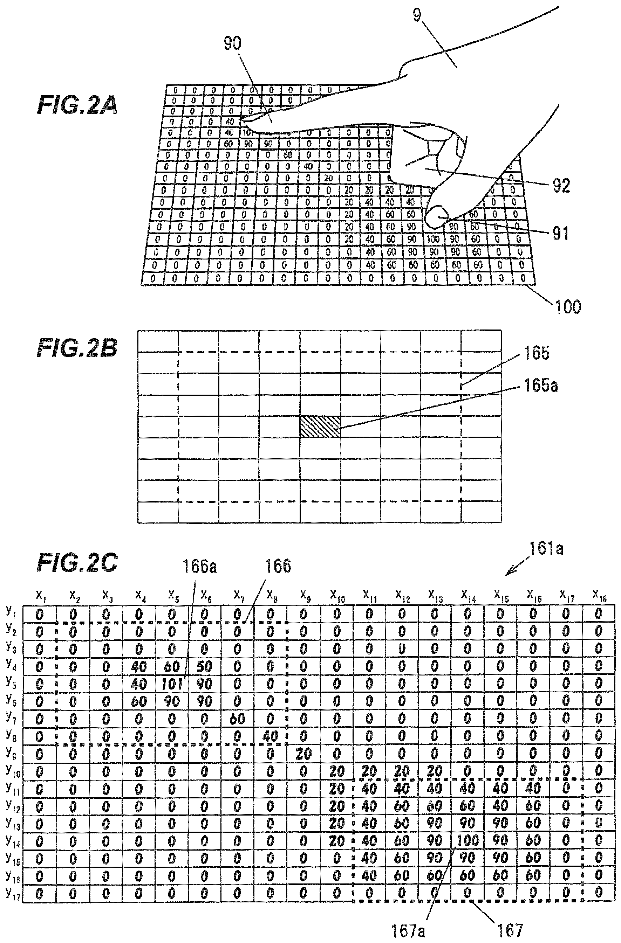

FIG. 1A is a schematic diagram illustrating an interior of a vehicle in which a touch panel according to a first embodiment is installed. FIG. 1B is a block diagram illustrating a configuration of the touch panel. FIG. 2A is a perspective view illustrating an example of a relationship between a distribution of detection values of the touch panel of the first embodiment and a hand of an operator. FIG. 2B is a schematic diagram illustrating an example of a setting range. FIG. 2C is a schematic diagram illustrating an example of the distribution of the detection values and the setting range. In the drawings associated with the following embodiments, ratios between elements in the drawings may be different from the actual ratios. In addition, in FIG. 1B, arrows indicate the flows of primary signals, information, and the like.

As illustrated in FIG. 1A, a touch panel 1 as an operation detection device is arranged overlapping with a display device 85. The display device 85 is installed on an instrument panel 80 that is located in front and between a driver's seat and a passenger's seat of a vehicle 8.

An operator can scroll a map image and give instructions such as selection and determination of an icon displayed on the display device 85 by approaching and contacting an operation surface 100 of the touch panel 1. Note that, as illustrated in FIG. 1A, the touch panel 1 may be a touchpad 86 and the like that is a remote control device arranged in a floor console 81 between the driver's seat and the passenger's seat. Hereinafter, a detection target is an operating finger of the operator, but no such limitation is intended, and a detection target may be a conductive pen or the like.

As illustrated in FIGS. 1B, 2A to 2C, the touch panel 1 includes a detector 10 and a controller 16 as a determination unit. The detector 10 is configured to detect an operating finger that approaches and contacts the operation surface 100 and output a detection value S₂. The controller 16 has a proximity threshold value 160 for detecting the operating finger that approaches the operation surface 100. The controller 16 is configured to, in a case where a plurality of detection values S₂ of greater than or equal to the proximity threshold value 160 are present distanced from each other on the operation surface 100 due to detection of a non-detection target different from the operating finger, set setting ranges 165 having the same predetermined size, with the detection values S₂ of greater than or equal to the proximity threshold value 160 as centers (centers 165a). The controller 16 is configured to determine the detection value S₂ of greater than or equal to the proximity threshold value 160 in the setting range 165 having the smallest calculation value calculated from the detection values S₂ included in the setting ranges 165 as a detection value S₂ at which the operating finger is detected, and determine an operation.

This controller 16 is configured to calculate an average value of the detection values S₂ in each of the setting ranges 165 as the calculation value. In a modification, the controller 16 may be configured to calculate a sum of the detection values S₂ in each of the setting ranges 165 as the calculation value. In this case, the controller 16 determines the detection value S₂ of greater than or equal to the proximity threshold value 160 in the setting range 165 having the smallest sum as a detection value S₂ at which the operating finger is detected.

### Configuration of Detector 10

The detector 10 is a touch sensor that detects a position approached and contacted by a part of the operator's body (a finger or a palm, for example) and the like on the operation surface 100, for example. The operator can, for example, operate an electronic device connected to the detector 10 by performing operations of approaching or contacting the operation surface 100. This detector 10 is an electrostatic capacitance-type touch sensor having a hover function. This hover function is a function of detecting a detection target that approaches the operation surface 100.

As illustrated in FIG. 1B, the detector 10 includes a plurality of driving electrodes 101, a plurality of detection electrodes 102, a driving 12, and a reading unit 14. In the operation surface 100, a direction from the left to right and a direction from the top to bottom are set to an x-axis and a y-axis, respectively, with the upper left of the paper plane in FIG. 1B as the origin.

The driving electrodes 101 and the detection electrodes 102 are arranged on the display device 85 as transparent electrodes using tin-doped indium oxide (ITO) or the like. The driving electrodes 101 and the detection electrodes 102 are arranged below the operation surface 100 so as to cross each other while being insulated from each other.

In the paper plane of FIG. 1B, the driving electrodes 101 are arranged at regular intervals parallel to the x-axis and electrically connected to the driving unit 12, for example. The controller 16 periodically switches the connection with the driving electrodes 101 and supplies a driving signal S₁.

In the paper plane of FIG. 1B, the detection electrodes 102 are arranged at regular intervals parallel to the y-axis and electrically connected to the reading unit 14, for example. The reading unit 14 periodically switches the connection with the detection electrodes 102 while the driving signal S₁ is supplied to one of the driving electrodes 101, and reads an electrostatic capacitance generated by the driving electrode 101 and the detection electrode 102 in combination. As an example, the reading unit 14 then performs analog-digital conversion on the electrostatic capacitance read to generate a detection value S₂ and outputs the detection value S₂ to the controller 16.

This detection value S₂ is generated according to a set resolution. Specifically, as illustrated in FIG. 2C, the reading unit 14 performs processing so as to obtain a detection value S₂ in a combination of a coordinate x₁ to a coordinate x₁₈ and a coordinate y₁ to a coordinate y₁₇.

For example, the controller 16 stores the detection values S₂ of one period as detection value distribution information 161. As illustrated in FIG. 2C, the detection value distribution information 161 is, for example, information of the distribution generated by assigning the detection values S₂ corresponding to the combinations of the coordinate x₁ to the coordinate x₁₈ and the coordinate y₁ to the coordinate y₁₇. Note that a period of reading of the detection values S₂ is 20 ms, for example.

### Configuration of Controller 16

The controller 16 is, for example, a microcomputer including a central processing unit (CPU) that carries out computations, processes, and the like on acquired data in accordance with a stored program, a random access memory (RAM) and a read only memory (ROM) that are semiconductor memories, and the like. A program for operations of the controller 16 and the proximity threshold value 160, for example, are stored in the ROM. The RAM is used as a storage region that temporarily stores computation results and the like, for example, and the detection value distribution information 161 is generated. The controller 16 also includes an internal means for generating a clock signal, and operates on the basis of this clock signal.

The proximity threshold value 160 is a threshold value for detection of the operating finger that approaches the operation surface 100. The proximity threshold value 160 is also used for detecting the operating finger that contacts the operation surface 100. In both cases, the controller 16 calculates a detection point on the operation surface 100 in which the operating finger is detected by a method such as a weighted average efficiency on the basis of the detection value S₂ of greater than or equal to the proximity threshold value 160. The detection point is calculated as coordinates in the xy coordinate system set on the operation surface 100.

The controller 16 then outputs operation information S₃ including the calculated coordinates of the detection point to the connected electronic device. Note that the proximity threshold value 160 in the present embodiment is set to 100 as an example.

In a modification, the controller 16 may have a touch threshold value of less than the proximity threshold value 160 and may be configured to detect contact of the operating finger using the touch threshold value.

A proximity distance that allows for detection by the detector 10 is approximately 20 mm, for example. Thus, the detector 10 can detect the operating finger at a distance of approximately 20 mm from the operation surface 100, for example.

As described above, the controller 16 sets a setting range, with the detection value S₂ of greater than or equal to the proximity threshold value 160 as the center. As an example, as illustrated in FIG. 2B, when the detection value S₂ in coordinates in a hatched area is greater than or equal to the proximity threshold value 160, the controller 16 sets the setting range 165 with the coordinates as the center 165a. This setting range 165 is a range that includes seven detection values S₂ in each of the x-axis and the y-axis, totaled to 49 detection values S₂, for example, but no such limitation is intended.

The controller 16 obtains an average value of the detection values S₂ in the setting range 165 and compares it with the other setting range to determine the detection value S₂ at which the detection target is detected.

Specifically, as illustrated in FIG. 2A, when the operator points at intended coordinates on the operation surface 100 with an index finger (operating finger 90), the detector 10 detects the detection values S₂ distributed like a shadow of a hand 9, for example.

The detection values S₂ located such that the operating finger 90 and a thumb 91 close to the operation surface 100 are projected have values increased as the operating finger 90 and the thumb 91 approach. After a while, the detection values S₂ become greater than or equal to the proximity threshold value 160 before the other coordinates. FIGS. 2A and 2C illustrate a detection value distribution 161a of a period where the detection values S₂ on the operation surface 100 close to the operating finger 90 and the thumb 91 are greater than or equal to the proximity threshold value 160.

Because the detection values S₂ at two points distanced from each other have become greater than or equal to the proximity threshold value 160, the controller 16 sets a first setting range 166 and a second setting range 167, with the detection values S₂ at the two points as centers (a center 166a and a center 167a). The first setting range 166 and the second setting range 167 include the same number of detection values S₂.

As illustrated in FIGS. 2A and 2C, the detection values S₂ in such a small region that the index finger (operating finger 90) is projected have values greater than zero in the first setting range 166. On the other hand, the detection values S₂ in such a large region that a clenched portion where fingers are clenched is projected have values greater than zero in the second setting range 167.

The controller 16 obtains a sum of the detection values S₂ in each of the first setting range 166 and the second setting range 167 that have been set and then obtains an average value of the detection values S₂. The sum of the first setting range 166 is 721 and from the fact that there are a total of 49 detection values S₂, the average value is 14.7. Similarly, the sum of the second setting range 167 is 2200, and thus the average value is 44.9.

The controller 16 compares these average values and determines that the detection value S₂ with the smallest value, in which the operating finger is detected, that is, the first setting range 166, is present. Then, on the assumption that a palm or the like is detected in the second setting range 167, the controller 16 does not calculate a detection point and invalidates these detection values S₂.

Note that, when the detection values S₂ of greater than or equal to the proximity threshold value 160 are adjacent to one another, for example, the detection value S₂ having the maximum value among them is the center. When the detection values S₂ have the same value, for example, coordinates close to their center or barycenter is the center. Furthermore, when the setting ranges overlap each other, average values are calculated in the overlapping state.

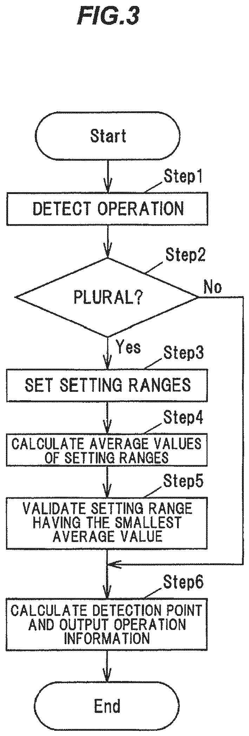

An example of operations of the touch panel 1 of the embodiment will be described below according to the flowchart illustrated in FIG. 3.

### Operations

The controller 16 of the touch panel 1 periodically acquires the detection value S₂ from the detector 10 after the power is supplied to the vehicle 8. The controller 16 generates the detection value distribution information 161 and compares the detection value S₂ with the proximity threshold value 160.

Upon detection of an operation (Step 1), in the case where the plurality of detection values S2 of greater than or equal to the proximity threshold value 160 are present (Step 2: Yes), the controller 16 sets the setting ranges 165 with the detection values S₂ as the center 165a (Step 3).

The controller 16 obtains a sum of the detection values S₂ in each of the setting ranges 165 and further calculates an average value thereof (Step 4).

The controller 16 compares the calculated average values and determines that the setting range 165 having the smallest average value is valid (Step 5). The controller 16 calculates a detection point, and generates and outputs the operation information S₃ (Step 6). The controller 16 ends the processing of this period.

Herein, in a case where no plurality of detection values S₂ of greater than or equal to the proximity threshold value 160 is present in Step 2 (Step 2: No), the controller 16 proceeds the processing to Step 6.

### Effects of the First Embodiment

The touch panel 1 according to the embodiment can reduce occurrences of false detection of a non-detection target. Specifically, the touch panel 1 determines that the detection value S₂ of greater than or equal to the proximity threshold value 160 in the set detection region 165 having the smallest average value is a detection value S₂ at which the operating finger is detected. Thus, even in the case where the plurality of detection values S₂ of greater than or equal to the proximity threshold value 160 are present due to detection of a non-detection target such as a palm, the operating finger and the non-detection target can be appropriately separated. The touch panel 1 can reduce occurrences of false detection of the non-detection target.

The touch panel 1 can detect the detection target and the non-detection target separately, so that an operation performed in a position away from the operation surface 100 can be accurately detected.

The touch panel 1 can reduce occurrences of false detection of the non-detection target. Thus, time for closely observing the display device 85 by the operator is reduced and time needed for input is shortened compared to the case where the false detection occurs. Furthermore, the touch panel 1 reduces the occurrences of the false detection. This reduces movement of the operator's line of sight and improves operability.

### Second Embodiment

A second embodiment differs from the first embodiment in that the second embodiment sets a setting range on the basis of a maximum value in a region in which an operation is detected.

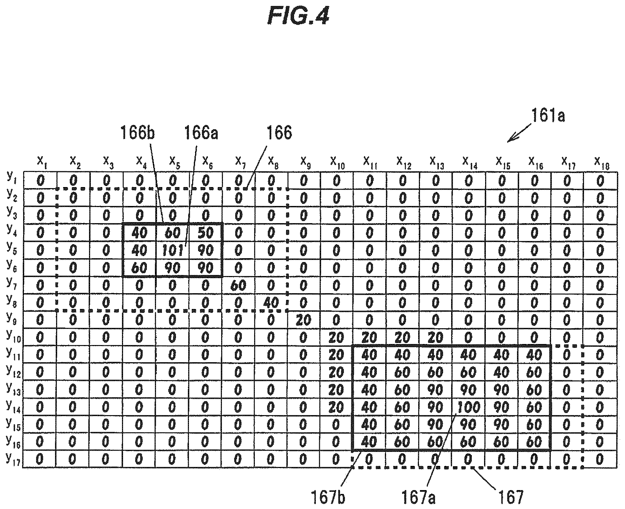

FIG. 4 is a schematic diagram illustrating an example of a distribution of detection values detected by a touch panel a setting range according to the second embodiment. In the embodiment described below, parts having the same functions and configurations as in the first embodiment will be given the same reference numerals as in the first embodiment, and descriptions thereof will be omitted.

The touch panel 1 in the present embodiment has the hover function and has a proximity threshold value (40) 160 lower than that of the first embodiment, for example. The controller 16 is configured to calculate a detection point on the basis of the detection value S₂ of greater than or equal to the proximity threshold value 160.

Specifically, the touch panel 1 includes the controller 16. The controller 16 is configured to set setting ranges in a detection target region in which an operating finger (detection target) instructing an operation is detected and a non-detection target region in which a non-detection target different from the operating finger is detected, with maximum values of the detection values S₂ as centers. The controller 16 is configured to determine the detection target region on the basis of the setting range having the smallest calculation value (average value) calculated from the detection values S₂ included in the setting ranges and determine an operation.

As an example, the detection target region and the non-detection target region are a detection region 166b and a detection region 167b surrounded by thick solid lines in FIG. 4. The controller 16 in the embodiment sets the first setting range 166 and the second setting range 167, with maximum values in the detection region 166b and the detection region 167b as centers, respectively.

The controller 16 then obtains a sum of the detection values S₂ in each of the first setting range 166 and the second setting range 167 and calculates an average value as a calculation value. As illustrated in FIG. 4, the controller 16 determines that the detection region 166b and the detection region 167b are the detection target region and the non-detection target region, respectively, because the average value of the first setting range 166 is smaller than that of the second setting range 167. The controller 16 calculates a detection point on the basis of the detection region 166b and outputs the operation information S₃ including information on coordinates of the detection point to the connected electronic device.

Note that, for example, the controller 16 may be configured to calculate a sum of the detection values S₂ in the setting range as the calculation value.

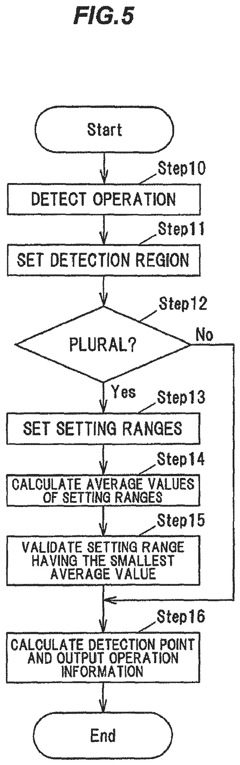

An example of operations of the touch panel 1 of the embodiment will be described below according to the flowchart illustrated in FIG. 5.

### Operations

The controller 16 of the touch panel 1 periodically acquires the detection value S₂ from the detector 10 after the power is supplied to the vehicle 8. The controller 16 generates the detection value distribution information 161 and compares the detection value S₂ with the proximity threshold value 160.

Upon detection of an operation (Step 10), the controller 16 sets a detection region from the detection values S₂ of greater than or equal to the proximity threshold value 160 (Step 11). As an example, the controller 16 sets a group of four detection values S₂ joined together as a detection region, but no such limitation is intended. The controller 16 may set a group of eight detection values S₂ joined together as a detection region.

In a case where the plurality of detection regions are present (Step 12: Yes), the controller 16 sets the setting ranges 165, with maximum values of the detection values S₂ in the detection regions as the centers 165a (Step 13).

The controller 16 obtains a sum of the detection values S₂ in each of the setting ranges 165 and further calculates an average value thereof (Step 14).

The controller 16 compares the calculated average values and determines that the setting range 165 having the smallest average value is valid (Step 15). The controller 16 calculates the detection point, and generates and outputs the operation information S₃ (Step 16). The controller 16 ends the processing of this period.

Herein, in the case where no plurality of detection regions is present in Step 12 (Step 12: No), the controller 16 proceeds the processing to Step 16.

### Effects of the Second Embodiment

The touch panel 1 in the embodiment determines, the setting region having the smallest average value set with the maximum value in the detection region having the detection values S₂ of greater than or equal to the proximity threshold value 160 as the center, as the detection target region. Thus, the touch panel 1 can appropriately separate the non-detection target region in which the non-detection target such as a palm is detected from the detection target region. The touch panel 1 can reduce occurrences of false detection of the non-detection target.

Parts of the touch panel 1 according to the embodiment and modifications described above may, depending on the application, be realized by a program executed by a computer, an application specific integrated circuit (ASIC), a field programmable gate array (FPGA), or the like.

Although several embodiments of the invention and modifications thereof have been described above, these embodiments and modifications are merely examples, and the invention according to claims is not intended to be limited thereto. Such novel embodiments and modifications can be implemented in various other forms, and various omissions, substitutions, changes, and the like can be made without departing from the spirit and scope of the invention.

In addition, all combinations of the features described in these embodiments and modifications are not necessary to solve the problem. Furthermore, these embodiments and modifications are included within the spirit and scope of the invention and also within the scope of the invention described in the claims and equivalents thereof.

### Reference signs list

1 Touch panel
10 Detector
16 Controller
100 Operation surface
160 Proximity threshold value
161 Detection value distribution information
161 a Detection value distribution
165 Setting range
165a Center
166 First setting range
166a Center
166b Detection region
167 Second setting range
167a Center
167b Detection region

## Claims

1. An operation detection device, comprising:
a detector configured to detect a detection target that approaches and contacts an operation surface and output a detection value; and
a determination unit having a proximity threshold value for detecting the detection target that approaches the operation surface, and configured to, in a case where a plurality of detection values of greater than or equal to the proximity threshold value are located at separate positions of the operation surface due to detection of a non-detection target different from the detection target, set setting ranges having a same predetermined size such that the detection values of greater than or equal to the proximity threshold value are centered,
wherein the determination unit is configured to regard a detection value of greater than or equal to the proximity threshold value in a setting range having a smallest one of calculation values calculated from the detection values included in the setting ranges as a detection value with which the detection target is detected so as to determine an operation.

2. An operation detection device, comprising:
a detector configured to detect a detection target that approaches and contacts an operation surface and output a detection value; and
a determination unit configured to set setting ranges having a same predetermined size such that maximum values of detection values in a detection target region in which the detection target instructing an operation is detected and a non-detection target region in which a non-detection target different from the detection target are centered,
wherein the determination unit is configured to determine the detection target region based on a setting range having a smallest one of calculation values calculated from the detection values included in the setting ranges so as to determine an operation.

3. The operation detection device according to claim 1 or 2, wherein the determination unit is configured to calculate a sum of the detection values in the setting ranges as the calculation values.

4. The operation detection device according to claim 1 or 2, wherein the determination unit is configured to calculate average values of the detection values in the setting ranges as the calculation values.

5. The operation detection device according to any one of claims 1 to 4, wherein the determination unit is configured to regard the setting range other than the setting range having the smallest calculation value as a setting range concerned with the non-detection target and invalidate the detection values in the setting range concerned with the non-detection target so as to determine the operation.

6. The operation detection device according to any one of claims 1 to 5, wherein the detector is installed in a vehicle and includes an electrostatic capacitance-type touch sensor having a hover function.

7. The operation detection device according to claim 1, wherein the determination unit has a touch threshold value of less than the proximity threshold value and is configured to set the setting ranges to the detection target and the non-detection target having the detection value of greater than or equal to the touch threshold value.

8. The operation detection device according to claim 2, wherein the determination unit is configured to identify the detection target region and the non-detection target region based on a detection point having a detection value of greater than or equal to a predetermined proximity threshold value.
